# EUROPEAN PATENT APPLICATION

(11) **EP 2 336 523 A2**
(43) Date of publication of application: **22.06.2011**
(21) Application number: 10194267.0
(22) Date of filing: 09.12.2010
(51) Int. Cl.: F02C 5/12, F02K 7/02, F02K 7/06

(54) **Pulse detonation system with fuel lean inlet region**

(30) Priority: 17.12.2009 US 641013
(71) Applicant: General Electric Company, Schenectady, NY 12345 (US)
(72) Inventor: Glaser, Aaron, Niskayuna, NY 12309 (US); Rasheed, Adam, Niskayuna, NY 12309 (US); Kenyon, Ross Hartley, Niskayuna, NY 12309 (US)
(74) Representative: Gray, Thomas

(57) **Abstract**

A pulse detonation system includes a pulse detonation tube (36) and an air valve (38) disposed at an upstream end (50) of the pulse detonation tube (36). The air valve (38) is configured to provide an air flow into the pulse detonation tube (36). The pulse detonation system also includes a fuel injector (12) configured to inject fuel (14) into the air flow to establish a fuel-air mixture configured to support detonation, and to establish a region in the fuel-air mixture having a fuel to air ratio insufficient to support a detonation wave. The pulse detonation system further includes an ignition source (40) configured to detonate the fuel-air mixture when the region is disposed adjacent to the air valve (38).

## Description

### BACKGROUND OF THE INVENTION

The subject matter disclosed herein relates generally to a pulse detonation system and, more specifically, to enhancing the durability of pulse detonation tubes.

Pulse detonation combustion can be utilized in various practical engine applications. An example of such an application is the development of a pulse detonation engine (PDE) where hot detonation products are directed through an exit nozzle to generate thrust for aerospace propulsion. Pulse detonation engines that include multiple combustor chambers are sometimes referred to as a "multi-tube" configuration for a pulse detonation engine. Another example is the development of a "hybrid" engine that uses both conventional gas turbine engine technology and pulse detonation (PD) technology to enhance operational efficiency. Such pulse detonation turbine engines (PDTE) can be used for aircraft propulsion or as a means to generate power in ground-based power generation systems.

Within a pulse detonation tube, the combustion reaction is a detonation wave that moves at supersonic speed, thereby increasing the efficiency of the combustion process as compared to subsonic deflagration combustion. Specifically, air and fuel are typically injected into the pulse detonation tube in discrete pulses. The fuel-air mixture is then detonated by an ignition source, thereby establishing a detonation wave that propagates downstream through the tube at a supersonic velocity. In addition, a weaker shock wave may propagate upstream toward the combustor inlet. The detonation process produces pressurized exhaust gas within the pulse detonation tube that may be used to produce thrust or be converted to work in a turbine.

Unfortunately, due to the high temperatures and pressures associated with detonation reactions, longevity of the pulse detonation tubes and associated components (e.g., air valve) may be significantly limited. Increasing the thickness and/or strength of the pulse detonation tubes and/or associated components may increase the operational life of a pulse detonation combustor, but may also increase weight to an undesirable level for typical applications. Similarly, constructing the pulse detonation tubes and/or associated components from expensive high temperature materials may be economically unfeasible.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a pulse detonation system includes a pulse detonation tube and an air valve disposed at an upstream end of the pulse detonation tube. The pulse detonation system also includes a fuel injector configured to inject fuel into the pulse detonation tube substantially within a region downstream from the air valve to establish an air-filled region adjacent to the air valve.

In a second embodiment, a pulse detonation system includes a pulse detonation tube and an air valve disposed at an upstream end of the pulse detonation tube. The air valve is configured to emanate an air pulse in a downstream direction. The pulse detonation system also includes a fuel injector configured to inject fuel into the air pulse to establish a mixed fuel-air region, and to terminate fuel injection prior to termination of the air pulse. The pulse detonation system further includes an ignition source disposed downstream from the air valve and configured to ignite the mixed fuel-air region when the mixed fuel-air region is positioned downstream from the air valve.

In a third embodiment, a pulse detonation system includes a pulse detonation tube and an air valve disposed at an upstream end of the pulse detonation tube. The air valve is configured to emanate air pulses in a downstream direction. The pulse detonation system also includes a fuel injector configured to inject fuel into each of the air pulses to establish a mixed fuel-air region, wherein a ratio of fuel to air within the mixed fuel-air region decreases along an upstream direction. The pulse detonation system further includes an ignition source disposed downstream from the air valve and configured to ignite each mixed fuel-air region when the ratio of fuel to air within a portion of the mixed fuel-air region adjacent to the air valve is insufficient to support a detonation wave.

In a fourth embodiment, a pulse detonation system includes a pulse detonation tube and an air valve disposed at an upstream end of the pulse detonation tube. The air valve is configured to provide an air flow into the pulse detonation tube. The pulse detonation system also includes a fuel injector configured to inject fuel into the air flow to establish a fuel-air mixture configured to support detonation, and to establish a region in the fuel-air mixture having a fuel to air ratio insufficient to support a detonation wave. The pulse detonation system further includes an ignition source configured to detonate the fuel-air mixture when the region is disposed adjacent to the air valve.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of a turbine system including a pulse detonation combustor having a pulse detonation tube configured to block propagation of detonation waves within a region adjacent to an air valve in accordance with certain embodiments of the present technique;
FIG. 2 is a schematic view of one embodiment of a pulse detonation tube having a fuel injector positioned downstream from the air valve in accordance with certain embodiments of the present technique;
FIG. 3 is a schematic view of the pulse detonation tube, as shown in FIG. 2, after fuel and air have been injected into the tube in accordance with certain embodiments of the present technique;
FIG. 4 is a schematic view of the pulse detonation tube, as shown in FIG. 2, after a fuel-air mixture has been detonated in accordance with certain embodiments of the present technique;
FIG. 5 is a schematic view of another embodiment of a pulse detonation tube having a fuel injector positioned adjacent to the air valve in accordance with certain embodiments of the present technique;
FIG. 6 is a schematic view of the pulse detonation tube, as shown in FIG. 5, after fuel and air have been injected into the tube in accordance with certain embodiments of the present technique;
FIG. 7 is a schematic view of the pulse detonation tube, as shown in FIG. 5, after a fuel-air mixture has been detonated in accordance with certain embodiments of the present technique;
FIG. 8 is a graph of valve position versus time for fuel and air valves that may be employed on the pulse detonation tube of FIGS. 5-7 in accordance with certain embodiments of the present technique; and
FIG. 9 is an alternative graph of valve position versus time for fuel and air valves that may be employed on the pulse detonation tube of FIGS. 5-7 in accordance with certain embodiments of the present technique.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As used herein, a pulse detonation combustor is understood to mean any device or system that produces both a pressure rise and velocity increase from a series of repeated detonations or quasi-detonations within the combustor. A "quasi-detonation" is a supersonic turbulent combustion process that produces a pressure rise and velocity increase higher than the pressure rise and velocity increase produced by a deflagration wave. Embodiments of pulse detonation tubes include a means of igniting a fuel/oxidizer mixture, for example a fuel/air mixture, and a detonation chamber, in which pressure wave fronts initiated by the ignition process coalesce to produce a detonation wave or quasi-detonation. Each detonation or quasi-detonation is initiated either by external ignition, such as spark discharge or laser pulse, or by gas dynamic processes, such as shock focusing, auto ignition or by another detonation (i.e. cross-fire). As used herein, detonation is used to mean either a detonation or quasi-detonation.

Embodiments of the present disclosure may significantly reduce thermal and structural loads applied to an air valve within a pulse detonation tube by insulating the air valve from a detonation wave. Specifically, the pulse detonation tube may be configured to establish a region adjacent to the air valve having an insufficient fuel to air ratio to support a detonation wave. In this manner, a detonation wave impacting the region will terminate and form a shock wave that propagates toward the air valve. Because the temperature and pressure associated with the shock wave may be significantly lower than the temperature and pressure of a detonation wave, the air valve may avoid exposure to excessive thermal and structural loads. Consequently, the air valve may be constructed from thinner and/or lighter materials, thereby decreasing the cost and reducing the weight of the pulse detonation system.

In one embodiment, the pulse detonation system may include a fuel injector configured to inject fuel into the pulse detonation tube substantially within a region downstream from the air valve. This configuration may establish a substantially unfueled region between the fuel injector and the air valve. As a detonation wave propagating in the upstream direction impacts the substantially unfueled region, the detonation wave may terminate, forming a shock wave that ultimately impacts the air valve, as discussed above. Because the pressure and temperature of the shock wave may be significantly lower than the pressure and temperature of the detonation wave, the air valve may be exposed to significantly lower thermal and structural loads.

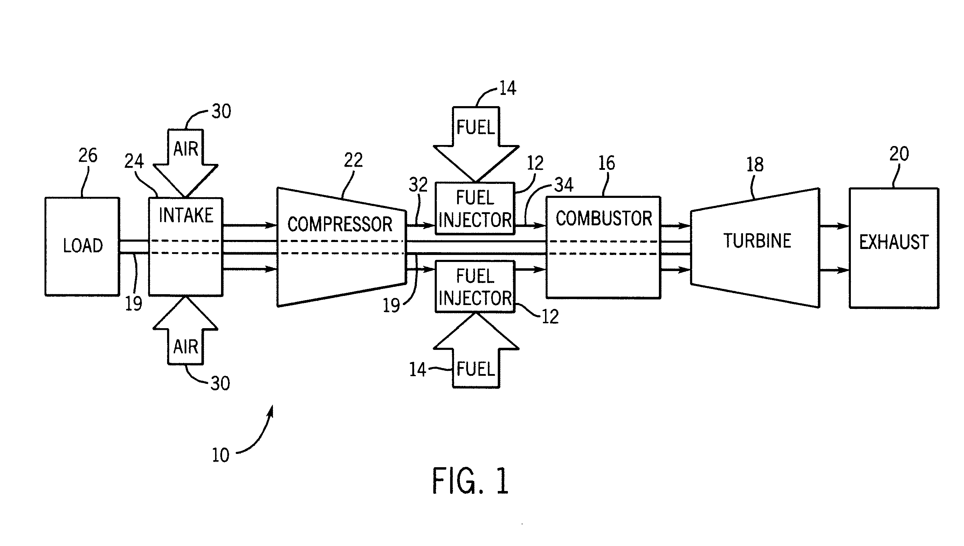

In an alternative configuration, the fuel injector may be positioned adjacent to the air valve, and configured to establish a substantially unfueled or lean fueled region adjacent to the air valve. Specifically, the air valve may be positioned at an upstream end of the pulse detonation tube and configured to emanate air pulses into the tube in a downstream direction. The fuel injector may be configured to inject fuel into each of these air pulses to establish a mixed fuel-air region. However, in one embodiment, the fuel injector may terminate fuel flow prior to the upstream termination of the air pulse. In this manner, a substantially unfueled region may be established between the upstream end of the mixed fuel-air region and the air valve. Consequently, a detonation wave propagating in the upstream direction may terminate prior to impacting the air valve, thereby limiting the thermal and structural loads on the air valve. In another embodiment, the fuel injector may be configured to gradually reduce fuel flow into the air pulse, thereby establishing a region of decreasing fuel concentration within the air pulse. Because a detonation wave may only propagate through a region having a minimum fuel concentration, the detonation wave may terminate upon reaching an area having a fuel concentration lower than the minimum value. Similar to the previously described embodiments, termination of the detonation wave downstream from the air valve may reduce the maximum exposure temperature and pressure, thereby allowing use of a thinner and/or lighter air valve. Turning now to the drawings and referring first to FIG. 1, a block diagram of an embodiment of a gas turbine system 10 is illustrated. The turbine system 10 includes a fuel injector 12, a fuel supply 14, and a combustor 16. As illustrated, the fuel supply 14 routes a liquid fuel and/or gas fuel, such as natural gas, to the gas turbine system 10 through the fuel injector 12 into the combustor 16. As discussed below, the fuel injector 12 is configured to inject and mix the fuel with compressed air. The combustor 16 ignites and combusts the fuel-air mixture, and then passes hot pressurized exhaust gas into a turbine 18. As will be appreciated, the turbine 18 includes one or more stators having fixed vanes or blades, and one or more rotors having blades which rotate relative to the stators. The exhaust gas passes through the turbine rotor blades, thereby driving the turbine rotor to rotate. Coupling between the turbine rotor and a shaft 19 will cause the rotation of the shaft 19, which is also coupled to several components throughout the gas turbine system 10, as illustrated. Eventually, the exhaust of the combustion process may exit the gas turbine system 10 via an exhaust outlet 20.

A compressor 22 may include 1 to 25, 5 to 20, 10 to 20, or 14 to 18 compressor stages, for example. Each compressor stage includes vanes and blades substantially equally spaced in a circumferential direction about the compressor 22. The vanes are rigidly mounted to a stator of the compressor 22 and configured to direct air toward the blades. The blades are rigidly mounted to a rotor which is driven to rotate by the shaft 19. As air passes through each compressor stage, air pressure increases, thereby providing the combustor 16 with sufficient air for proper combustion. The compressor 22 may intake air to the gas turbine system 10 via an air intake 24. Further, the shaft 19 may be coupled to a load 26, which may be powered via rotation of the shaft 19. As will be appreciated, the load 26 may be any suitable device that may use the power of the rotational output of the gas turbine system 10, such as a power generation plant or an external mechanical load. For example, the load 26 may include an electrical generator, a propeller of an airplane, and so forth. The air intake 24 draws air 30 into the gas turbine system 10 via a suitable mechanism, such as a cold air intake. The air 30 then flows through blades of the compressor 22, which provides compressed air 32 to the combustor 16. In particular, the fuel injector 12 may inject the compressed air 32 and fuel 14, as a fuel-air mixture 34, into the combustor 16. Alternatively, the compressed air 32 and fuel 14 may be injected directly into the combustor for mixing and combustion.

As discussed in detail below, the present embodiment includes one or more pulse detonation tubes within the combustor 16. The tubes are configured to receive compressed air 32 and fuel 14 in discrete pulses. After a pulse detonation tube has been loaded with a fuel-air mixture, the mixture is detonated by an ignition source, thereby establishing a detonation wave that propagates through the tube at a supersonic velocity. The detonation process produces pressurized exhaust gas within the pulse detonation tube that ultimately drives the turbine 18 to rotate. In certain embodiments, the pulse detonation tubes are configured to establish a substantially unfueled or lean fueled region adjacent to an upstream air valve. Because the detonation wave may not propagate through the substantially unfueled or lean fueled region, the air valve may be substantially insulated from the temperature and pressure associated with the detonation wave. Such a configuration may enable the air valve to be constructed from thinner and/or lighter materials, and/or increase the operational life of the air valve. While the pulse detonation tubes are described with reference to a turbine system combustor 16, it should be appreciated that the presently disclosed embodiments may be utilized for other applications, such as "pure" pulse detonation engines in which the exhaust is directed through a converging-diverging nozzle directly to ambient to produce raw thrust, as well as other applications employing pulse detonation tubes. Furthermore, while the present embodiments describe a combustion reaction involving fuel and air, it should be appreciated that alternative embodiments may react other oxidizers (e.g., oxygen, nitrous oxide, etc.) with the fuel to produce a combustion reaction.

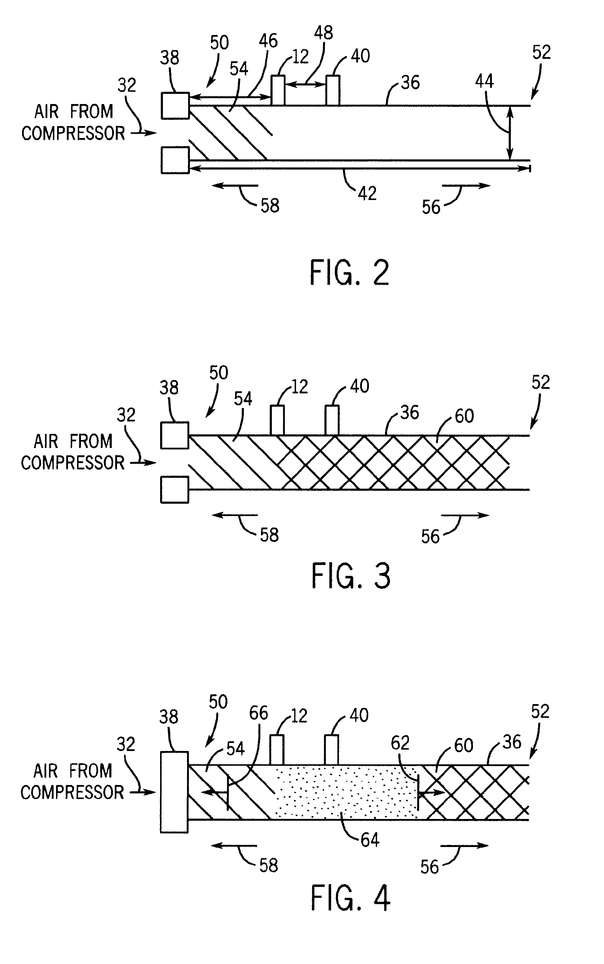

FIG. 2 is a schematic view of one embodiment of a pulse detonation tube 36, in which the fuel injector 12 is positioned downstream from an air valve 38. Certain combustors 16 include multiple pulse detonation tubes 36, with each tube receiving an air flow from the compressor 22. Each pulse detonation tube 36 includes at least one fuel injector 12 (e.g., 1, 2, 3, 4, 5, 6, 7, 8, 9, 10, or more), which feeds fuel to a combustion zone located within each pulse detonation tube 36. Furthermore, each pulse detonation tube 36 includes an air valve 38 disposed to an upstream end of the tube 36. As discussed in detail below, the air valve 38 is configured to inject discrete air pulses into the pulse detonation tube 36. It should be appreciated that the air valve 38 may also inject discrete pulses of other oxidizers (e.g., oxygen, nitrous oxide, etc.) into the pulse detonation tube 36, either independently or in combination with the air. The fuel injector 12 is configured to inject fuel into each of the air pulses to establish a fuel-air mixture suitable for detonation. An ignition source 40 then detonates the fuel-air mixture, thereby forming a detonation wave that propagates through the pulse detonation tube 36. Exhaust gas from the detonation reaction will cause vanes or blades within the turbine 18 to rotate as exhaust gas passes toward the exhaust outlet 20. As discussed in detail below, the fuel injector 12 and/or the air valve 38 are particularly configured to establish a substantially unfueled or lean fueled region adjacent to the air valve 38, thereby insulating the air valve from the high temperature and pressure associated with the detonation wave.

In the present embodiment, the fuel injector 12 is configured to inject fuel within a region downstream from the air valve 38 and non-adjacent to the air valve 38. As illustrated, the pulse detonation tube 36 has a length 42 configured to facilitate formation and propagation of a detonation wave such that the injected fuel-air mixture may combust to drive the turbine 18. For example, in certain configurations, the length 42 of the pulse detonation tube 36 may be approximately 10 to 50, 20 to 40, 25 to 35, or about 30 inches. An inner diameter 44 of the pulse detonation tube 36 may also be particularly configured to facilitate detonation wave formation and propagation. For example, the diameter 44 may be approximately 1 to 10, 1 to 7, 2 to 4, or about 2 inches. As will be appreciated, the length 42 and diameter 44 of the pulse detonation tube 36 may be configured to accommodate particular fuel and/or air flow rates, selected fuels, turbine configurations, engine sizes, or other parameters.

In one embodiment, the fuel injector 12 is positioned a distance 46 downstream from the air valve 38, and the ignition source 40 is positioned a distance 48 downstream from the fuel injector 12. As discussed in detail below, the position of the fuel injector 12 and ignition source 40 may be selected to establish a substantially unfueled region adjacent to the air valve 38, thereby blocking propagation of detonation waves and limiting the pressure and temperature adjacent to the air valve 38. For example, the distance 46 may be greater than approximately 5%, 10%, 15%, 20%, 25%, 30%, 35%, 40%, or more of the length 42 of the pulse detonation tube 36. In one embodiment, the length 42 of the pulse detonation tube 36 is approximately 30 inches, and the distance 46 between the air valve 38 and the fuel injector 12 is approximately 8 inches. Furthermore, the distance 48 between the fuel injector 12 and the ignition source 40 may be a function of tube diameter 44. For example, in certain embodiments, the distance 48 may be approximately 0.5 to 3.5, 1 to 3, 1.5 to 2.5, or about 2 times the tube diameter 44.

As previously discussed, the pulse detonation tube 36 is configured to combust a fuel-air mixture by forming a detonation wave that propagates through the pulse detonation tube 36. This detonation process proceeds through a series of stages, as illustrated by FIGS. 2-4. First, the air valve 38, positioned at an upstream end 50 of the pulse detonation tube 36, opens to receive air 32 from the compressor 22. As will be appreciated, the air valve 38 may be any suitable type for pulse detonation systems, such as a rotary valve, a can valve, a disk valve, or a slider valve, for example. As air enters the pulse detonation tube 36 through the air valve 38, an air-filled region 54 is established at the upstream end 50 of the pulse detonation tube 36. In general, the air flow proceeds through the tube 36 in a downstream direction 56, substantially opposite from an upstream direction 58.

As illustrated in FIG. 3, as the air flow passes the fuel injector 12, the fuel injector 12 begins injecting fuel into the air flow, thereby establishing a mixed fuel-air region 60. As will be appreciated, the fuel injector 12 may be configured to flow fuel at a rate sufficient to establish a proper fuel-air mixture for detonation. For example, the fuel injector 12 may be configured to establish an ideal (i.e., stoichiometric), slightly rich (i.e., higher than stoichiometric), or slightly lean (i.e., lower than stoichiometric) fuel-air ratio. While a single fuel injector 12 is illustrated in the present embodiment, it will be appreciated that multiple fuel injectors 12 may be positioned about the circumference of the pulse detonation tube 36 to provide an even distribution of fuel into the air flow. Furthermore, the fuel injector 12 may be configured to inject a liquid fuel, a gaseous fuel, or a combination thereof. Because the fuel injector 12 is positioned downstream from the air valve 38, the air-filled region 54 remains substantially unfueled. In other words, because the air flow induces the fuel-air mixture to travel through the tube 36 in the substantially downstream direction 56, the fuel remains substantially within the mixed fuel-air region 60. As discussed in detail below, because the air-filled region 54 is substantially unfueled, it may not facilitate propagation of a detonation wave in the upstream direction 58, thereby limiting exposure of the air valve 38 to the high temperatures and pressures characteristic of a detonation wave.

After the mixed fuel-air region 60 has been established within the pulse detonation tube 36, the air valve 38 closes and the mixture is ignited, as illustrated in FIG. 4. Specifically, after the air valve 38 is closed, the ignition source 40 is activated, establishing a deflagration to detonation transition (DDT) which forms a detonation wave 62. As illustrated, the detonation wave 62 propagates through the mixed fuel-air region 60 in the downstream direction 56 at a supersonic velocity toward the downstream end 52 of the pulse detonation tube 36. The detonation wave 62 induces a combustion reaction between the fuel and air within the mixed region 60, thereby forming a region 64 of exhaust products upstream of the wave 62. As the detonation wave 62 propagates through the mixed fuel-air region 60, the interior of the pulse detonation tube 36 becomes pressurized due to expansion of exhaust products within the region 64. After the detonation wave 62 has substantially reacted the fuel and air within the pulse detonation tube 36, the pressurized exhaust products are expelled, thereby driving the turbine 18 to rotate.

In addition, activation of the ignition source 40 may induce a second detonation wave or strong pressure wave coupled with combustion (e.g., quasi-detonation wave) that propagates through the mixed fuel-air region 60 in the upstream direction 58. However, because the air-filled region 54 is substantially unfueled, the second detonation wave may terminate at the interface between the mixed fuel-air region 60 and the air-filled region 54. Interaction between the second detonation wave and the air-filled region 54 may establish a shock wave 66 that propagates in the upstream direction 58 toward the air valve 38. As will be appreciated, the temperature and pressure associated with the shock wave 66 may be significantly lower than the temperature and pressure of a detonation wave. Consequently, the air valve maximum exposure temperature and pressure may be limited. For example, the pressure of the detonation wave 62 may be approximately 300 psi, while the pressure of the shock wave 66 may be approximately 100 psi. The reduction in pressure may enable the air valve 38 to be constructed of thinner/lighter materials, thereby reducing the weight of the turbine system 10. In addition, this configuration may substantially reduce or eliminate upstream flow through the closed air valve 38, thereby facilitating efficient operation of the combustor 16.

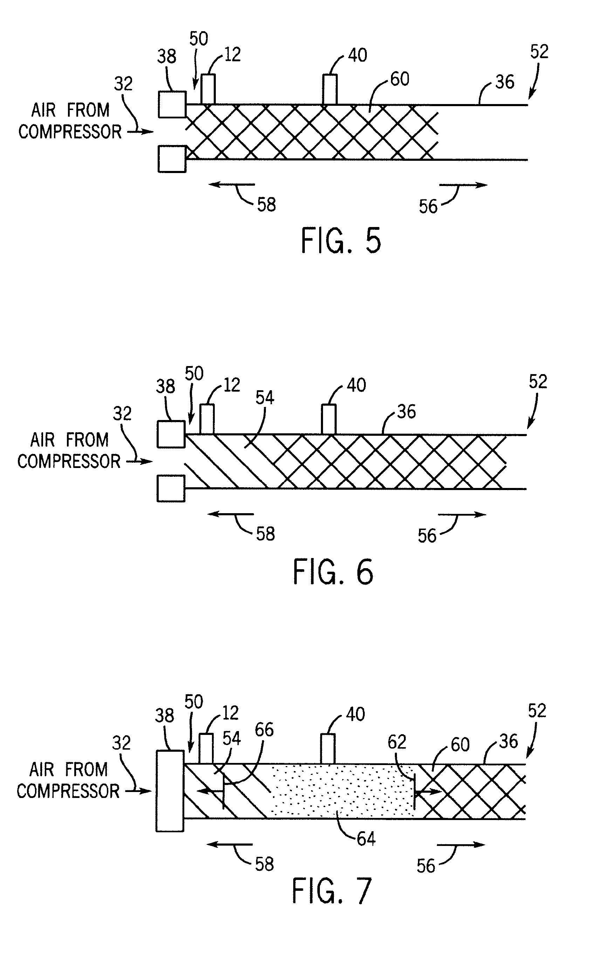

FIG. 5 is a schematic view of another embodiment of a pulse detonation tube 36, in which the fuel injector 12 is positioned adjacent to the air valve 38. As discussed in detail below, this embodiment is configured to establish a substantially unfueled or lean fueled region adjacent to the air valve 38, thereby limiting propagation of the detonation wave in the upstream direction 58 and reducing the maximum air valve exposure temperature and pressure. Similar to the previously described embodiment, the pulse detonation tube 36 is configured to combust a fuel-air mixture by forming a detonation wave that propagates through the pulse detonation tube 36. As illustrated by FIGS. 5-7, the detonation reaction proceeds through a series of stages. First, the air valve 38 opens to facilitate air flow 32 from the compressor 22 to enter the pulse detonation tube 36. However, in contrast to the previously described embodiment, fuel is injected into the air flow within a region directly adjacent to the upstream end 50 of the tube 36. This configuration establishes a mixed fuel-air region 60 that extends from the air valve 38 into the pulse detonation tube 36 in the downstream direction 56. In an alternative embodiment, the fuel injector 12 may be positioned upstream of the air valve 38 and configured to mix fuel and air prior to passage through the air valve 38.

As illustrated in FIG. 6, the fuel injector 12 is configured to terminate fuel flow into the pulse detonation tube 36 while the air valve 38 is open. Because the air flow 32 induces the mixed fuel-air region to travel in the downstream direction 56, a substantially unfueled region 54 is established at the upstream end 50 of the pulse detonation tube 36. As previously discussed, the fuel concentration within the air-filled region 54 may be insufficient to support a detonation wave. Therefore, the air valve 38 may be substantially isolated from the high temperatures and pressures associated with a detonation wave. This configuration may reduce mechanical and thermal loading of the air valve 38, thereby enabling the air valve 38 to be constructed from lighter materials.

Similar to FIG. 4, FIG. 7 represents the interior of the pulse detonation tube 36 after the ignition source 40 has been activated. Specifically, after the air valve 38 is closed, the ignition source 40 is activated, establishing a DDT that forms a detonation wave 62. The detonation wave 62 propagates through the mixed fuel-air region 60 in the downstream direction 56, forming a region 64 of exhaust products upstream of the wave 62. Similarly, a second detonation wave or quasi-detonation wave propagates in the upstream direction 58 toward the interface between the mixed fuel-air region 60 and the air-filled region 54. At the interface, the detonation wave terminates and a shock wave 66 is formed that propagates through the air-filled region 54, ultimately impacting the air valve 38. Because the temperature and pressure of the shock wave 66 are lower than a detonation wave, the air valve 38 may experience lower mechanical and thermal loading. As previously discussed, once the detonation wave 62 has substantially reacted the entire fuel-air mixture, the exhaust products 64 are expelled through the downstream end 52 of the pulse detonation tube 36, thereby driving the turbine 18 to rotate.

As discussed in detail below, certain configurations of the present embodiment may gradually decrease fuel flow into the pulse detonation tube 36 after the mixed fuel-air region 60 is established. As compared to discrete termination, the gradual reduction in fuel flow from the fuel injector 12 may form a region having a decreasing fuel to air ratio upstream from the mixed fuel-air region 60. For example, in certain configurations, the fuel to air ratio may decrease substantially linearly within this region. At a certain fuel to air ratio, the mixture may no longer support a detonation wave. Therefore, the fuel injector 12 may be configured to establish a region within the fuel-air mixture having a mixture ratio that blocks propagation of the detonation wave. In such a configuration, the region may be positioned adjacent to the air valve 38 during detonation such that the detonation wave terminates prior to impacting the air valve 38. Such a configuration may limit the pressure and temperature exposure of the air valve 38, thereby enabling the air valve to be constructed from lighter materials.

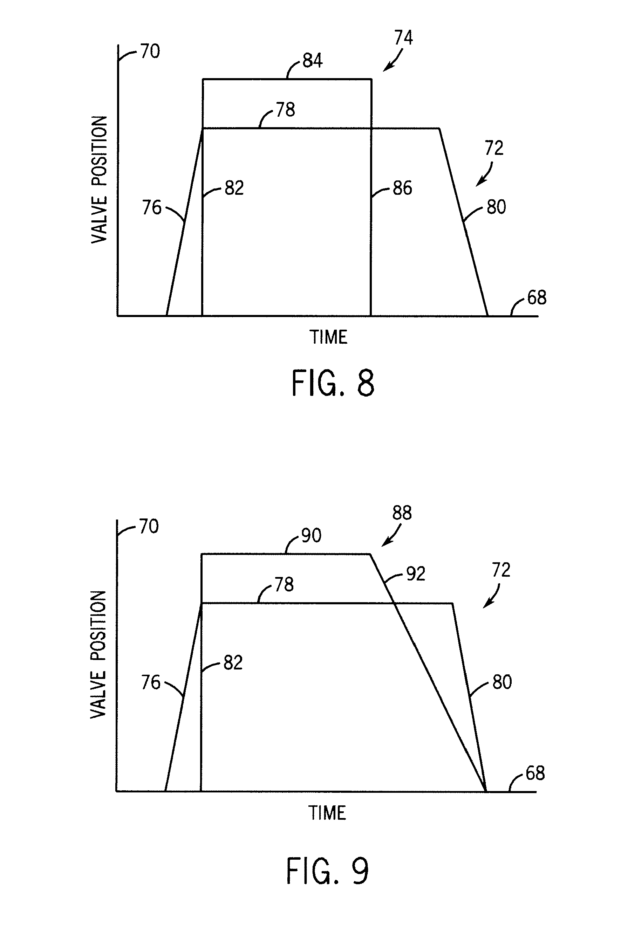

FIG. 8 is a graph of valve position versus time for valve profiles that may be employed on the pulse detonation tube 36 of FIGS. 5-7. As illustrated, a horizontal axis 68 represents time, a vertical axis 70 represents valve position, curve 72 represents a valve profile for the air valve 38, and curve 74 represents a valve profile for the fuel injector 12. The air valve profile 72 includes an opening transition segment 76, an open segment 78, and a closing transition segment 80. As will be appreciated, certain air valve configurations (e.g., rotary, can, disk, slider, etc.) transition between open and closed positions over time, as illustrated by transitions 76 and 80. While both transitions 76 and 80 are linear in the present embodiment, alternative embodiments may employ non-linear transitions. As previously discussed, the fuel injector 12 is configured to flow fuel into the pulse detonation tube 36 when the air valve 38 opens, thereby establishing a mixed fuel-air region 60 that extends downstream from the air valve 38, as illustrated in FIG. 5. Consequently, a valve controlling fuel flow to the fuel injector 12 opens when the air valve opening transition segment 76 is complete, as illustrated by segment 82 of the fuel injector valve profile 74. Then, as illustrated by segment 84, the fuel injector valve remains open to establish the mixed fuel-air region 60.

Furthermore, the fuel injector valve is configured to close prior to the air valve closing transition segment 80, as illustrated by segment 86. In this manner, the air valve 38 will flow air into the pulse detonation tube 36 after fuel flow from the fuel injector 12 is terminated, thereby establishing the air-filled region 54, as illustrated in FIG. 6. As previously discussed, because the air-filled region 54 is substantially unfueled, a detonation wave from the combustion process may be blocked from contacting the air valve 38, thereby insulating the air valve 38 from the high pressure and temperature associated with the detonation wave. This configuration may enable the air valve 38 to be constructed from lighter materials and limit flow of exhaust gas through the valve 38.

FIG. 9 is a graph of valve position versus time for alternative valve profiles that may be employed on the pulse detonation tube 36 of FIGS. 5-7. Similar to the previously described graph, the horizontal axis 68 represents time, the vertical axis 70 represents valve position, the curve 72 represents the valve profile for the air valve 38, and curve 88 represents an alternative valve profile for the fuel injector 12. In the present embodiment, the air valve profile 72 is substantially similar to the air valve profile 72 of FIG. 8. Furthermore, the fuel injector valve is configured to open over a short period of time, as illustrated by opening transition 82, when the air valve 38 has reached its fully open position 78. In addition, the valve controlling fuel flow into the fuel injector 12 is configured to maintain an open position 90 for a substantially similar period to the previously described embodiment.

However, instead of closing the fuel injector valve over a short period, as represented by the closing transition 86 of FIG. 8, the fuel injector valve is gradually closed over time, as represented by a closing transition segment 92. In the present embodiment, both the air valve 38 and the fuel injector valve complete the closing transition at approximately the same time. The gradual closing of the fuel injector valve progressively decreases fuel flow into the pulse detonation tube 36, thereby establishing a region having a decreasing fuel to air ratio upstream of the mixed fuel-air region 60. As previously discussed, a fuel to air ratio below a certain value may not sustain a detonation wave. Therefore, as the detonation wave impacts this particular fuel to air ratio within the decreasing fuel to air ratio region, the detonation wave terminates and emanates a shock wave. Because the temperature and pressure associated with the shock wave is lower than the temperature and pressure of a detonation wave, the air valve 38 may be substantially insulated from the detonation wave. This configuration facilitates manufacturing air valves of lighter materials.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

For completeness, various aspects of the invention are now set out in the following numbered clauses:
1. A pulse detonation system, comprising:
   a pulse detonation tube;
   an air valve disposed at an upstream end of the pulse detonation tube; and
   a fuel injector configured to inject fuel into the pulse detonation tube within a region downstream from the air valve to establish an air-filled region adjacent to the air valve.
2. The system of clause 1, wherein the fuel injector is disposed downstream from the air valve at a distance greater than approximately 20% of a length of the pulse detonation tube.
3. The system of clause 1, comprising an ignition source disposed downstream from the fuel injector.
4. The system of clause 3, wherein the ignition source is disposed downstream from the fuel injector at a distance approximately equal to twice a diameter of the pulse detonation tube.
5. The system of clause 1, wherein the air valve comprises a rotary valve, a can valve, a disk valve, or a slider valve.
6. A pulse detonation system, comprising:
   a pulse detonation tube;
   an air valve disposed at an upstream end of the pulse detonation tube and configured to emanate an air pulse in a downstream direction;
   a fuel injector configured to inject fuel into each air pulse to establish a mixed fuel-air region, and to terminate or reduce fuel injection prior to termination of the respective air pulse; and
   an ignition source disposed downstream from the air valve and configured to ignite the mixed fuel-air region when the mixed fuel-air region is positioned downstream from the air valve.
7. The system of clause 6, wherein the fuel injector is disposed adjacent to the air valve and configured to inject fuel into the pulse detonation tube.
8. The system of clause 6, wherein the air valve comprises a rotary valve, a can valve, a disk valve, or a slider valve.
9. The system of clause 6, wherein the fuel injector is configured to progressively decrease a fuel flow into each air pulse such that fuel flow terminates at an upstream end of each air pulse.
10. A pulse detonation system, comprising:
   a pulse detonation tube;
   an air valve disposed at an upstream end of the pulse detonation tube and configured to emanate air pulses in a downstream direction;
   a fuel injector configured to inject fuel into each of the air pulses to establish a mixed fuel-air region, wherein a ratio of fuel to air within the mixed fuel-air region decreases along an upstream direction; and
   an ignition source disposed downstream from the air valve and configured to ignite each mixed fuel-air region when the ratio of fuel to air within a portion of the mixed fuel-air region adjacent to the air valve is insufficient to support a detonation wave.
11. The system of clause 10, wherein the fuel injector is disposed adjacent to the air valve and configured to inject fuel into the pulse detonation tube.
12. The system of clause 10, wherein the fuel injector is configured to progressively decrease a fuel flow into each air pulse such that fuel flow terminates at an upstream end of each air pulse.
13. The system of clause 10, wherein the air valve comprises a rotary valve, a can valve, a disk valve, or a slider valve.
14. A pulse detonation system, comprising:
   a pulse detonation tube;
   an air valve disposed at an upstream end of the pulse detonation tube and configured to provide an air flow into the pulse detonation tube;
   a fuel injector configured to inject fuel into the air flow to establish a fuel-air mixture configured to support detonation, and to establish a region in the fuel-air mixture having a fuel to air ratio insufficient to support a detonation wave; and
   an ignition source configured to detonate the fuel-air mixture when the region is disposed adjacent to the air valve.
15. The system of clause 14, wherein the air valve comprises a rotary valve, a can valve, a disk valve, or a slider valve.
16. The system of clause 14, wherein the fuel injector is configured to inject fuel into the pulse detonation tube substantially within a region downstream from the air valve.
17. The system of clause 16, wherein the fuel injector is disposed downstream from the air valve at a distance greater than approximately 20% of a length of the pulse detonation tube.
18. The system of clause 14, wherein the fuel injector is configured to terminate fuel injection prior to termination of the air flow to establish a substantially unfueled region adjacent to the air valve.
19. The system of clause 14, wherein the fuel injector is configured to progressively decrease a fuel flow into the air flow.
20. The system of clause 19, wherein the fuel injector is configured to terminate the fuel flow at a termination of the air flow.

## Claims

1. A pulse detonation system, comprising:
a pulse detonation tube (36);
an air valve (38) disposed at an upstream end (50) of the pulse detonation tube (36);
and
a fuel injector (12) configured to inject fuel (14) into the pulse detonation tube (36) within a region (60) downstream from the air valve (38) to establish an air-filled region (54) adjacent to the air valve (38).

2. The system of claim 1, wherein the fuel injector (12) is disposed downstream from the air valve (38) at a distance (46) greater than approximately 20% of a length (42) of the pulse detonation tube (36).

3. The system of claim 1 or 2, comprising an ignition source (40) disposed downstream from the fuel injector (12).

4. The system of claim 3, wherein the ignition source (40) is disposed downstream from the fuel injector (12) at a distance (48) approximately equal to twice a diameter (44) of the pulse detonation tube (36).

5. The system of any of the preceding claims, wherein the air valve comprises a rotary valve, a can valve, a disk valve, or a slider valve.

6. The system of claim 5, wherein the fuel injector (12) is configured to inject fuel (14) into the pulse detonation tube (36) substantially within a region (60) downstream from the air valve (38).

7. The system of claim 6, wherein the fuel injector (12) is disposed downstream from the air valve (38) at a distance (46) greater than approximately 20% of a length (42) of the pulse detonation tube (36).

8. The system of claim 5, wherein the fuel injector (12) is configured to terminate fuel injection prior to termination of the air flow to establish a substantially unfueled region (54) adjacent to the air valve (38).

9. The system of claim 5, wherein the fuel injector (12) is configured to progressively decrease a fuel flow into the air flow.

10. The system of claim 9, wherein the fuel injector (12) is configured to terminate the fuel flow at a termination of the air flow.
